# EUROPEAN PATENT APPLICATION

(11) **EP 1 342 561 A1**
(43) Date of publication of application: **10.09.2003**
(21) Application number: 01993544.4
(22) Date of filing: 09.11.2001
(51) Int. Cl.: B32B 5/24, B62D 25/20

(54) **INTERIOR MATERIAL**

(30) Priority: 10.11.2000 JP 2000342764
(71) Applicant: Nagoya Oilchemical Co., Ltd., Tokai-shi, Aichi 476-0001 (JP)
(72) Inventor: OGAWA, Masanori, c/o Nagoya Oilchemical Co., Ltd., Tokai-shi, Aichi 476-0001 (JP); KIOKA, Norihiko, c/o Nagoya Oilchemical Co., Ltd., Tokai-shi, Aichi 476-0001 (JP)
(74) Representative: VOSSIUS & PARTNER
(86) International application number: JP0109852
(87) International publication number: WO02038374

(57) **Abstract**

An interior material which is satisfactorily water and oil repellent, has excellent sound and impact absorption. The interior material (1) comprises a porous base (2) and a resin-impregnated nonwoven fabric (3) bonded to one or either side thereof through a hot melt film (4).

## Description

### FIELD OF THE INVENTION

The present invention relates to automotive interior features such as the head lining, door trim, trunk room interiors, and under-floor covers, the types of which are used in cars.

### BACKGROUND OF THE INVENTION

As the cover of underside of the engine or of the wheel housing of a car, a cover consisting of a glass fiber sheet, and an aluminum sheet which is bonded to underside of said glass fiber sheet through a hot melt film is provided.

Said aluminum sheet is used to repel water or oil from said cover, which acts to protect underside of the engine or the wheel housing from water, gravel, or the like which is kicked up during the running of the car. However, said conventional cover has faults that big noise is produced when water or gravel collide with said cover since said aluminum sheet is attached to the underside of said cover, and that said aluminum sheet is apt to be damaged since the impact is not eased in said cover.

### DISCLOSURE OF THE INVENTION

To solve said problems of said conventional cover, an interior material (1) consisting of a porous base material (2) and nonwoven fabric sheet (3) in which a synthetic resin is impregnated is provided in the present invention. Said nonwoven fabric sheet(s) is (are) bonded to one or either side of said porous base material through hot melt film(s) (4). Said synthetic resin impregnated in said nonwoven fabric sheet (3) is desirably a phenolic resin, and further said phenolic resin is desirably a resorcinol resin. Furthermore, a water repellent agent and/or an oil repellent agent is (are) desirably mixed in said synthetic resin. Still further, the thickness of said hot melt film (4) is desirably 0.005 to 0.5mm, more desirably 0.001 to 0.3mm.

Said interior material (1) is advantageously used as the car interior material such as the underside cover (6, 7) of the floor of a car.

### BRIEF DESCRIPTION OF THE DRAWINGS

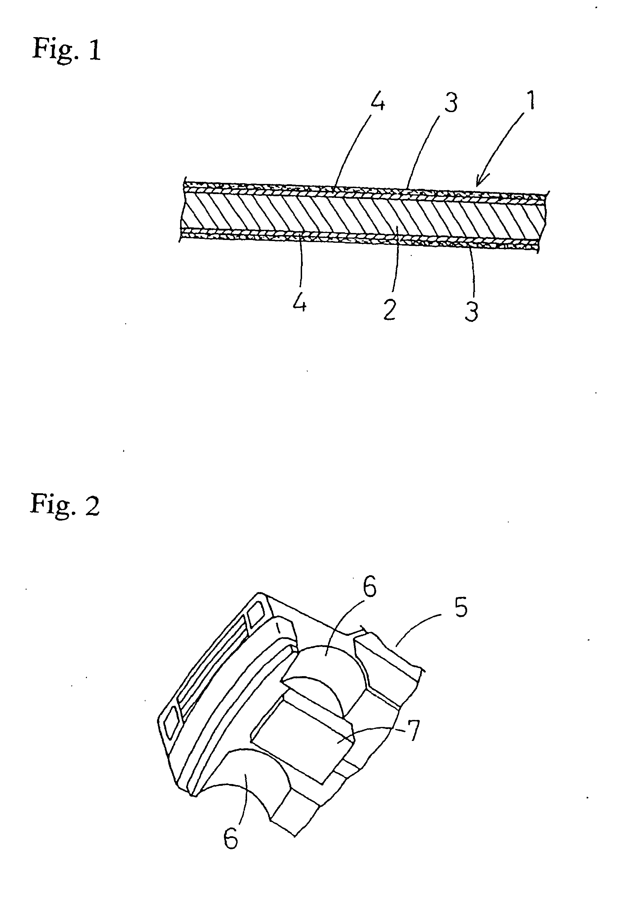

Figs.1 and 2 show an embodiment of the present invention. Fig.1 is a side sectional view of said interior material. Fig.2 is a partial perspective view of the underside of the floor of a car.

### Description

1: Interior material
2: Porous base material
3: Nonwoven fabric in which a synthetic resin is impregnated.
4: Hot melt film
6,7: Cover

### PREFERRED EMBODIMENT

The present invention is precisely explained below.

Now, the present invention is explained in the embodiment shown in Figs.1 and 2. An interior material (1) consists of a porous base material (2) and synthetic resin impregnated nonwoven fabric (3) bonded to the either side of said porous base material (2) through hot melt film (4).

As said porous base material, a fiber sheet wherein an inorganic fibers such as glass fiber, carbon fiber, ceramics fiber, asbestos fiber, and/or synthetic fibers such as polyester fiber, polyethylene fiber, polypropylene fiber, polyamide fiber, acrylic fiber, urethane fiber, polyvinyl chloride fiber, polyvinylidene chloride fiber, acetate fiber, and/or natural fibers such as pulp, cotton, wool, coconut fiber, hemp, kenaf fiber, bamboo fiber is (are) bonded together by a synthetic resin or intertwined together by the needle punching, or polyurethane foam, or polyolefin foam such as polyethylene foam, polypropylene foam, and the like, or plastic foam such as polyvinyl chloride foam, polystyrene foam, melamine resin foam, urea resin foam, phenol foam, and the like, is used.

In said porous base material (2), a thermosetting resin such as urethane resin, melamine resin, thermosetting acrylic resin, urea resin, phenol resin, epoxy resin, thermosetting polyester and the like, and a thermoplastic resin such as polyethylene, polypropylene, ethylene-propylene copolymer, ethylene-propylene terpolymer, ethylene-vinyl acetate copolymer, poly (vinyl chloride), poly (vinylidene chloride), polystyrene, poly (vinyl acetate), fluororesin, thermoplastic acrylic resin, thermoplastic polyester, thermoplastic polyamide, thermoplastic urethane resin, acrylonitrile-butadiene copolymer, styrene-butadiene copolymer, acrylonitrile-butadiene-styrene copolymer and the like, and a resin precursor such as urethane resin pre-polymer, epoxy resin pre-polymer, melamine resin pre-condensation product, urea resin pre-condensation product, phenol resin pre-condensation product, diallylphthalate pre-polymer, allyloligomer, polyisocyanate, methacrylester monomer, diallylphthalate monomer and the like may be impregnated. Two or more kinds of said resin or resin precursor may be mixed to use. As said resin impregnated nonwoven fabric (3), a nonwoven fabric wherein the same fiber as used in said porous base material (2) is intertwined by the needle punching is mainly used, and the same resin or a resin precursor as impregnated in said porous base material is impregnated in said nonwoven fabric (3). Desirable resin to be impregnated in said nonwoven fabric is a phenolic resin.

Said phenolic resin used in the present invention is a condensation polymer of monohydic phenol and/or polyhydric phenol and an aldehyde and/or aldehyde donor. Said phenolic resin may be sulfoalkylated and/or sulfialkylated.

As said monohydric phenol, alkyl phenols such as o-cresol, m-cresol, p-cresol, ethylphenol, isopropylphenol, xylenol, 3,5-xylenol, butylphenol, t-butylphenol, nonylphenol and the like; monohydric derivatives such as o-fluorophenol, m-fluorophenol, p- fluorophenol, o-chlorophenol, m-chlorophenol, p-chlorophenol, o-bromophenol, m-bromophenol, p-bromophenol, o-iodophenol, m-iodophenol, p-iodophenol, o-aminophenol, m-aminophenol, p-aminophenol, o-nitrophenol, m-nitrophenol, p-nitorophenol, 2,4-dinitorophenol, 2,4,6-trinitorophenol and the like; monohydric phenols of polycyclic aromatic compounds such as naphthol and the like are illustrated, and said monohydric phenol may be used singly or a mixture of two or more kinds of said monohydric phenols may be used.

As said polyhydric phenol, resorsin, alkylresorsin, pyrogallol, catechol, alkyl catechol, hydroquinone, alkyl hydroquinone, phloroglucin bisphenol, dihydroxynaphthalene and the like are illustrated and said polyhydric phenol may be used singly or a mixture of two or more kinds of said polyhydric phenols may be used. Desirable polyhydric phenols are resorcin or alkylresorcin (resorcinic compound), and alkyl resorcin is more desirable than resorcin since alkylresorcin reacts with aldehyde more quickly.

The alkylresorsins include 5-methyl resorsin (orcinol), 5-ethyl resorsin, 5-propyl resorsin, 5-n-butyl resorsin, 4,5-dimethyl resorsin, 2,5-dimethyl resorsin, 4,5-diethyl resorsin, 2,5-diethyl resorsin, 4,5-dipropyl resorsin, 2,5-dipropyl resorsin, 4-methyl-5-ethyl resorsin, 2-methyl-5-ethyl resorsin, 2-methyl-5-propyl resorsin, 2,4,5-trimethyl resorsin, 2,4,5-triethyl resorsin, and the like.

Polyhydric phenol mixture produced by dry distillation of oil shale produced in Estonia is inexpensive, and said polyhydric phenol mixture includes 5-metylresorcin and many kinds of alkylresorcin having a high reactivity so that said polyhydric phenol mixture is a specially desirable polyphenol raw material.

Further, desirable phenolic resin is a condensation polymer of single resorcinic compound such as resorcin, alkyl resorcin, and the like or a mixture of two or more kinds of resorcinol(s) and/or alkyl resorcinol(s) (including polyhydric phenol mixture produced by dry distillation of oil shale produced in Estonia) and aldehyde and/or aldehyde donor.

As said aldehyde or aldehyde donor means aldehyde or a compound or a mixture which emits aldehyde when said compound or said mixture decomposes. The compound such as formalin, formaldehyde, paraformaldehyde, trioxane, acetoaldehyde, propionaldehyde, polyoxymethylene, chloral, hexamethylenetetramine, furfural, glyoxal, n-butylaldehyde, caproaldehyde, allylaldehyde, benzaldehyde, crotonaldehyde, acrolein, tetraoxymethylene, phenylacetoaldehyde, o-tolualdehyde, salicylaldehyde, is singly used or a mixture of two or more kinds of aldehyde or aldehyde donor is used.

In the case of the polycondensation of the monohydric phenol and/or the polyhydric phenol and the aldehyde and/or aldehyde donor, usually the aldehyde and/or aldehyde donor (0.2 mole to 3 moles) are/is added to the monohydric phenol (1 mole), and the aldehyde and/or aldehyde donor (0.1 mole to 0.8 mole) are/is added to the polyhydric phenol (1 mole), and if necessary, a solvent, third component, and catalyst may be added, and the resulting reactant mixture is reacted by heating at 55 to 100°C for 3 to 20 hours. Addition of the aldehyde and/or aldehyde donor may be done at one time at the beginning of the reaction, or several times during the reaction.

As said catalyst, acidic catalyst, for instance, inorganic acid or organic acid such as hydrochloric acid, sulfuric acid, orthophosphoric acid, boric acid, oxalic acid, formic acid, acetic acid, butyric acid, benzenesulfonic acid, phenolsulfonic acid, p-toluenesulfonic acid, naphthalene-α-sulfonic acid, naphthalene-β-sulfonic acid and the like; esters of organic acid such as dimethyl oxalate and the like; acid anhydrides such as phthalic anhydride, maleic anhydride and the like; salts of ammonium such as ammonium chloride, ammonium sulfate, ammonium nitrate, ammonium oxalate, ammonium acetate, ammonium phosphate, ammonium thiocyanate, ammonium imidosulfonate and the like; halogenated organic compounds such as monochloroacetic acid, salt thereof, α, α '-dichlorohydrin and the like; hydrochloride of amines such as triethanolamine hydrochloride, aniline hydrochloride and the like; urea adducts such as urea adduct of salicylic acid, urea adduct of stearic acid, urea adduct of heptanoic acid and the like; acidic catalyst such as N-trimethyl taurine, zinc chloride, ferric chloride and the like, alkali catalyst for instance hydroxides of alkalimetals or alkali earth metals such as sodium hydroxide, potassium hydroxide, barium hydroxide, calcium hydroxide and the like, oxides of alkali earth metals such as lime and the like, alkali metals salt with weak acid such as sodium carbonate, sodium sulfite, sodium acetate, sodium phosphate and the like are used.

Additional amount of said catalyst is preferably in the range of 0.001 to 20 % by weight, more preferably in the range of 0.01 to 10 % by weight. The temperature at which curing of the resulting precondensate of phenolic resin starts (the temperature at which curing rate rapidly increases) can be adjusted by the additional amount of said catalyst.

The sulfimethylation agent usable to sulfimethylation of said phenolic resin is such as alkaline metal sulfoxylates of aliphatic or aromatic aldehyde such as sodium formaldehyde sulfoxylate (a.k.a. Rongalit), sodium benzaldehyde sulfoxylate and the like; hydrosulfites (a.k.a. dithionites) of alkaline metal or alkaline earth metal such as sodium hydrosulfite, magnesium hydrosulfite and the like; alkyl sulfoxylate (e.g. sodium ethyl sulfoxylate), hydroxyalkanesulfinate such as hydroxymethanesulfinate and the like.

The salfomethylation agent usable to sulfomethylation of said phenolic resin is such as water soluble sulfites prepared by reaction of sulfurous acid, bisulfurous acid, or metabisulfirous acid and alkaline metals, trimethyl amine, quaternary ammonium (e.g. benzyltrimethylammonium); hydroxy alkane sulfonate (e.g. hydroxymethanesulfonate), prepared by reaction of water soluble sulfites and aldehydes.

Addition of the sulfomethylation agents and/or sulfimethylation agents may be done any time before, during or after the condensation.

Total additional amount of said sulfoalkylation agent and/or sulfialkylation agent is usually in the range of 0.001 to 1.5 moles for 1 mole of phenol. To provide excellent using property of the resulting precondensate and excellent physical properties of the cured resin, said additional amount is preferably in the range of 0.01 to 0.8 mole for 1 mole of phenol.

The resulting sulfomethylated and/or sulfimethylated precondensate of said phenolic resin has a good stability as the solution and phase separation is hard to take place and further curing rate of said sulfomethylated and/or sulfimethylated precondensate increases.

### (Precondensation polymer of phenolic resin)

Precondensation polymer of said phenolic resin is commonly provided as aqueous solution or organic solvent-water mixture solution.

As said organic solvent, water soluble, hydrophilic or organic solvent; alcohol such as methanol, ethanol, n-propanol, isopropanol, n-butanol, isobutanol, s-butanol, t-butanol, n-amyl alcohol, isoamyl alcohol, n-hexanol, methyamyl alcohol, 2-ethylbutanol, n-heptanol, n-octanol, trimethylnonyl alcohol, cyclohexanol, benzyl alcohol, furfuryl alcohol, tetrahydro furfuryl alcohol, abietyl alcohol, diacetone alcohol and the like; ketone such as acetone, methyl acetone, methyl ethyl ketone, methyl-n-propyl ketone, methyl-n-butyl ketone, methyl isobutyl ketone, diethyl ketone, di-n-propyl ketone, diisobutyl ketone, acetonylacetone, methyloxide, cyclohexanone, methyl cyclohexanone, acetophenone, camphor and the like; glycol such as ethylene glycol, diethylene glycol, triethylene glycol, propylene glycol, trimethylene glycol, poly ethylene glycol and the like; glycol ether such as ethylene glycol monomethyl ether, ethylene glycol monoethyl ether, ethylene glycol isopropyl ether, diethylene glycol monomethyl ether, triethylene glycol monomethyl ether and the like; ester and derivatives thereof such as ethylene glycol diacetate, diethylene glycol monoethyl ether acetate and the like; ether such as 1,4-dioxane, diethyl cellosolve, diethyl carbitol, ethyl lactate, isopropyl lactate, diglycol diacetate, N,N-dimethylformamide and the like, can be used. Two or more kinds of said organic solvent can be mixed to use.

If necessary, in said solution of precondensate, the catalyst used for said condensation reaction, or aldehyde or aldehyde donor such as formaldehyde, paraformaldehyde, 1,3,5-trioxane, acetoaldehyde, propion aldehyde, polyoxymethylene, chloral, hexamethylenetetramine, furfural, glyoxal, n-butylaldehyde, caproaldehyde, allylaldehyde, benzaldehyde, crotonaldehyde, acrolein, tetraoxymethylene, phenylacetoaldehyde, o-tolualdehyde, salicylaldehyde, methylol urea, methylated methylol urea, urea resin, methylol melamine, methylated methylol melamine, alkylol triazone derivative and the like can be used as curing agent.

Besides said curing agent, said phenolic resin may be modified by cocondensation polymerization or mixing by adding a third component. Said third component is such as monohydric phenol resins, polyhydric phenol resins, amino resins such as urea resins, melamine resins and the like; natural rubbers, derivatives thereof; synthetic rubbers such as styrene/butadiene rubber, acrylonitrile/butadiene rubber, chloroprene rubber, ethylene/propylene rubber, isoprene rubber, isoprene/isobutylene rubber and the like; vinyl homopolymers or vinyl copolymers such as vinyl acetate, vinyl propionate, styrene, acrylate, methacrylate, acrylonitrile, acrylic acid, methacrylic acid, maleic acid, vinyl chloride, vinylidene chloride, vinylpyridine and the like; emulsions, latices, aqueous or solutions of polyurethane, polyamide, epoxy resin, butyral resin, polyethylene, polypropylene, vinyl acetate/ethylene copolymer, chlorinated polyethylene, chlorinated polypropylene, polyester and the like; water soluble polymers or natural gums such as polyvinyl alcohol, sodium alginate, starch, starch derivatives, glue, gelatin, nitrogen fertilizer, methylcellulose, carboxymethylcellulose, hydroxymethylcellulose, polyacrylic acid, polyacrylic amide and the like; fillers such as calcium carbonate, talc, gypsum, carbon black, wood powder, walnut powder, coconut powder, wheat flour, rice flour and the like; surface active agent; higher fatty acids such as stearic acid, palmitin acid and the like; higher alcohols such as palmityl alcohol, stearyl alcohol and the like; ester of fatty acid such as butylstearate, glycerin monosteatate and the like; amides of fatty acid; natural wax such as carnauba wax and the like; synthetic wax; release agents such as paraffin, paraffin oil, silicone oil, silicone resin, fluororesin, polyvinylalcohol, grease and the like; low boiling point solvents such as hexane, butane, n-pentane, alcohol, ether, methylene chloride, tetrachloromethane, chlorofluoromethane, 1,1,2-trichloro-1,2,2-trifluoroethane and the like; organic foaming agents such as azodicarbonamide, dinitorosopentamethylenetetramine, P,P'-oxybis(benzensulfonyl hydrazide), azobis-2,2'-(2-methyl glopio nitorile) and the like; inorganic foaming agents such as sodium bicarbonate, potassium bicarbonate, ammonium bicarbonate and the like; microcapsule foaming agents consisting of a thermoplastic resin capsule which includes a gas such as n-pentane, isopentane, butane, isobutene and the like; porous particles such as silas balloon, paerlite, glass balloon, foamed glass, porous ceramics and the like, plastic foam and powder thereof such as polyethylene foam, polystyrene foam, polypropylene foam, pigment, dye, fire retardant, antiflame agent, insect repellent(insecticide), antiseptic, antioxidant, ultraviolet absorber; plasticizers such as phthalate (e.g. dibutyl phthalate (DBP), dioctyl phthalate (DOP), dicyclohexylphthalate), tricresyl phosphate and the like.

In said phenolic resin, polyhydric phenol has a good water, oil, and heat as well as weather resistance, and is equally both rigid and flexible, which adds to its toughness.

As the material of said hot-melt film(4), polyethylene, polypropylene, polyethylenetelephtalate, polyamide, vinylacetate ethylene copolymer and the like or a mixture thereof (including polymer alloy and polymer blend) is used and the melting temperature of said resin material is below 200°C, preferably 100 to 150°C, more preferably 100 to 130°C.

Further, water or oil repellant agent such as natural wax, synthetic wax, fluororesin, silicone resin and the like, fire retardant, antiseptic, insect repellent (insecticide), antioxidant, ultraviolet absorber, fungicide, pigment, dye, filler, deodorant and the like may be impregnated in said synthetic resin impregnated nonwoven fabric (3).

Said interior material (1) is commonly manufactured by attaching said synthetic resin impregnated nonwoven fabric (3) through said hot melt film (4) on either side of said porous base material (2) and pressing said porous base material (2) on either side of which said synthetic resin impregnated nonwoven fabric (3) is attached through said hot melt film (4) by the softening of said hot melt film (4) through the application of heat. During said press processing, said heated and softened hot melt film (4) is impregnated a little into the surface parts of said porous base material (2) to form a discontinuous and breathable film. However, since a synthetic resin is impregnated in said nonwoven fabric (3), the permeating of oil or water in the resulting interior material (1) is checked.

Namely, said discontinuous and breathable film formed by pressing said softened hot melt film (4) by heating is breathable but has functions of preventing oil or water from permeating in said interior material, so that the thickness of said hot melt film (4) is preferably in the range of 0.005 to 0.5mm, because when the thickness of said hot melt film is less than 0.005mm, the function of said discontinuous and breathable film to prevent oil or water from permeating in said interior material (1) is lost, while when the thickness of said hot melt film (4) is greater than 0.5mm, the resulting film formed from said hot melt film (4) has the continuous structure to be not breathable.

To form said discontinuous and breathable film, the thickness of said hot melt film (4) is more preferably in the range of 0.01 to 0.3mm.

In a case where said hot melt film (4) is not used in said interior material (1), it may be possible to give said interior material (1) oil or water repellent property to a certain extent by adding water repellent agent or oil repellent agent in the synthetic resin which is impregnated in said nonwoven fabric, but when said hot melt film (4) is used in said interior material, an extremely excellent effect of water or oil repellency is obtained without damaging sound proof property.

Further, since said hot melt film (4) is discontinuous and breathable film and has an excellent elasticity in said interior material (1), said interior material (1) has excellent sound and impact absorption properties.

Said interior material (1) may be molded in a desirable shape. In this case, said interior material (1) is molded by hot-pressing, cold-pressing after heating or the like, before, when or after said synthetic resin impregnated nonwoven fabric (3) is bonded to said porous base material (2). As shown in Fig. 2, said molded interior material is useful for car interiors, for instance, the underside cover (6) of the wheel housings (5), the underside cover (7) of the engine, the head lining, the door trim, the rear parcel, the trunk room interior, and the like.

EXAMPLES of the present invention are described below but said embodiments do not limit the scope of the present invention.

### EXAMPLE 1

Thirty parts by weight of alkylolated triazone derivative (45% by weight) was added as a curing agent to 100 parts by weight of polyhydric phenol formaldehyde precondensate and the resulting mixture was impregnated in anonwoven fabric made of a polyester fiber (unit weight 100g/m²) on one side of which a polyethylene film (4) was laminated by extrusion molding (thickness 0.2mm), said mixture was impregnated in saidnonwoven fabric in an amount of 30g /m² as the solid. After said mixture was impregnated in saidnonwoven fabric, saidnonwoven fabric was dried at 100°C for 3 minutes to precure to put said polyhydric phenolformaldehyde precondensate in B-stage.

A glass wool containing 20% by weight of a thermosetting phenolic resin (unit weight: 500g/m²) was prepared as a porous base material (2) and a pair of said synthetic resin impregnated nonwoven fabrics (3) in which said precondensate was put in B-stage were attached on either side of said glass wool through said polyethylene film (4) laminated on one side of said nonwoven fabric (3) and said glass wool on either side of which said nonwoven fabrics were attached was then molded at 180°C for 60 seconds to manufacture an interior material (1).

Since said polyethylene film (4) was impregnated a little in said glass wool to form a discontinuous and breathable film in said interior material (1), even if the water is sprayed to nonwoven fabric side, the water is repelled effectively and said interior material (1) has an excellent sound absorption property.

### EXAMPLE 2

One point five parts by weight of a fluorinated water repellent agent (25% by weight ) and 10 parts by weight of a fire retardant containing nitrogen and phosphate (50% by weight) were added to 100 parts by weight of a resol type monohydricphenol-polyhydric phenol-formaldhyde prcondensate (50% by weight ) which is a product of phenol-alkyl resorsin-formaldehyde and the resulting mixture was impregnated in anonwoven fabric made of polyester fiber (unit weight 50g/m²) on one side of which a polyethylene film (4) was laminated by extrusion molding (thickness 0.02mm), said mixture was impregnated in said nonwoven fabric in an amount of 30g/cm² as the solid. After said mixture was impregnated in said nonwoven fabric, said nonwoven fabric was dried at 100°C for 3 minutes to precure to put said monohydric phenol-polyhydricphenol-formaldehyde precocondensate in B stage.

A glass wool containing 20% by weight of a thermosetting phenolic resin (unit weight:500g/m²) was prepared as a porous base material (2) and a pair of said synthetic resin impregnated nonwoven fabrics (3) in which said precondensate was put in B-stage were attached on either side of said glass wool through said polyethylene film (4) laminated on one side of said nonwoven fabric (3) and said glass wool on either side of which said nonwoven fabrics were attached was molded at 180°C for 60 seconds to manufacture an interior material (1).

Since said polyethylene film (4) was impregnated a little in said glass wool to form a discontinuous and breathable film in said interior material (1), even if the water is sprayed to nonwoven fabric side, the water is repelled effectively and said interior material (1) has an excellent sound absorption property.

### COMPARISON 1

A interior material was manufactured by the same method as used in EXAMPLE 2 excepting that a polyethylene film having a thickness of 0.003 mm was laminated on one side of said nonwoven fabric. In the resulting interior material, said melted polyethylene film was mostly impregnated in said glass wool and a desirable discontinuous and breathable film was not formed. As a result, said interior material has an enough sound absorption property (breathing property) but when the water was sprayed to said nonwoven fabric side, said polyethylene film could not prevent the water from permeating into said glass wool, and said interior material has a poor water repellent property.

### COMPARISON 2

An interior material was manufactured by the same method as used in EXAMPLE 2 excepting that a polyethylene film having a thickness of 0.6mm was laminated on one side of said nonwoven fabric.

In the resulting interior material, said melted polyethylene film was hardly impregnated into said glass wool and a desirable discontinuous and breathable film was not obtained.

As a result, said interior material has an enough water repellent property but a poor sound absorption property (breathing property) since said polyethylene film insulate said interior material from air.

### EFFECT OF THE INVENTION

Said interior material of the present invention has excellent water and oil repellent properties, as well as being sound proof and having excellent impact absorption. Said interior material, thus, is very useful as the car interior material such as the underside cover of the floor of a car and the like.

## Claims

1. An Interior material consisting of a porous base material and nonwoven fabric sheet(s) in which a resin is impregnated and said nonwoven fabric is (are) bonded to one or either side of said porous base material through hot melt film(s).

2. An interior material in accordance with claim 1, wherein said resin impregnated in nonwoven fabric sheet(s) is phenolic resin.

3. An interior material in accordance with claim 2, wherein said phenolic resin is a resorcinol resin.

4. An interior material in accordance with claims 1 to 3, wherein a water repellent agent and/or an oil repellent agent is (are) mixed in said phenolic resin.

5. An interior material in accordance with claim 1, wherein the thickness of said hot melt film is 0.005 to 0.5mm, desirably 0.001 to 0.3mm.

6. An interior material in accordance with claims 1 to 5, wherein said interior material is a car interior material.

7. An interior material in accordance with claim 6, wherein said car interior material is the underside cover of the floor of a car.

## Amended claims

### Amended claims under Art. 19.1 PCT

**1.** (Amended) An Interior material consisting of a porous base material and nonwoven fabric sheet(s) in which a phenolic resin is impregnated and said nonwoven fabric is (are) bonded to one or either side of said porous base material through hot melt sheet(s).

**2.** (Amended) An interior material in accordance with claim 1, wherein said phenolic resin is a resorcinol resin.

**3.** (Amended) An interior material in accordance with claims 1 or 2, wherein a water repellent agent and or an oil repellent agent is (are) mixed in said phenolic resin.

**4.** (Amended) An interior material in accordance with claims 1 to 3, wherein the thickness of said hot melt film is 0.005 to 0.5m, desirably 0.001 to 0.3mm.

**5.** (Amended) An interior material in accordance with claims 1 to 4, wherein said interior material is a car interior material.

**6.** (Amended) An interior material in accordance with claim 5, wherein said car interior material is the underside cover of the floor of a car.
